# EUROPEAN PATENT SPECIFICATION

(11) **EP 3 108 481 B1**
(45) Date of publication and mention of the grant of the patent: **09.10.2019**
(21) Application number: 14882963.3
(22) Date of filing: 19.02.2014
(51) Int. Cl.: H01B 7/06, H02G 3/04, H02G 11/00, B25G 1/04, B25F 5/02

(54) **MECHANICAL BUSH FOR CENTERING HELIX CABLE**
MECHANISCHE BUCHSE ZUM ZENTRIEREN EINES SPIRALKABELS
DOUILLE MÉCANIQUE POUR CENTRER UN CÂBLE EN HÉLICE

(43) Date of publication of application: 28.12.2016
(73) Proprietor: Husqvarna AB, 561 82 Huskvarna (SE)
(72) Inventor: RIEF, Joachim, 89584 Ehingen (DE); SCHWER, Peter, 88483 Burgrieden (DE)
(86) International application number: PCT/SE2014/050200
(87) International publication number: WO 2015/126287

(56) References cited:
- WO-A1-2017/014008
- DE-A1- 19 632 400
- DE-A1-102004 048 809
- DE-A1-102004 048 809
- US-A- 5 826 341
- US-A- 5 826 341
- US-A- 5 884 403
- US-A1- 2005 081 387
- US-A1- 2005 081 387

## Description

### TECHNICAL FIELD

Example embodiments generally relate to electric powered devices with telescoping components and, more particularly, relate to protection of cabling in such devices when they are telescopically extended and collapsed.

### BACKGROUND

Handheld outdoor power devices such as trimmers, blowers, chainsaws, and/or the like, are often used to perform tasks relating to yard/grounds maintenance or even commercial resource harvesting activities that require them to be mobile. Although there are several options for powering such devices, including combustion engines, corded electric motors, or battery powered electric motors, each option may be viewed as having advantages in certain environments and for certain users.

An advantage of battery powered electric motors and combustion engines is that the corresponding devices can be freely operated without concern for cutting a cord accidentally, and without range limitations provided by the cord. Such devices have therefore proven to be popular for many different tasks. Meanwhile, in some applications, electric powered devices are preferred, even when corded, since they do not produce emissions and avoid the need to purchase, transport and store fossil fuels.

For many electrically powered devices, it has been common for such devices to be specialized to a particular function (e.g., trimming, blowing, cutting, etc.), so that different devices may be employed for corresponding different functions. In some cases, even devices that are specialized for performance of a particular function can be further modified to improve their performance capabilities. For example, handles or other components may be made to be extendible to increase the range or reach of the devices to allow operators to access remote locations.

When extendible handles or other components are employed on electrical powered devices where the electrical power is transmitted through an extendible component, the cord that transmits the power must accommodate the possible different sizes or lengths of the extendible component. One way to accommodate these size or length changes is to employ a helix cable that can extend or retract along with the corresponding extension or retraction of the component. However, the continued expansion and retraction may cause friction between the helix cable and its housing, which could damage the helix cable and even, in some cases, cause the helix cable to be compromised and become electrically connected to its housing.

DE19632400 A1 discloses an engagement component for telescopic sections in vacuum cleaner sections, where an engagement knob project from the outer telescopic section for operation and work together with the inner telescopic section via a rocker-like support. A straight portion of a helical electric cord is arranged in the center of the outer section.

### BRIEF SUMMARY OF SOME EXAMPLES

Example embodiments therefore provide a mechanical bush for centering the helix cable within a telescoping tube. By providing such centering, the collapsing of a previously expanded telescoping tube may be accomplished without exposing the helix cable (e.g., an end portion of the helix cable) to significant risk of undesirable contact (e.g., pinching) with the collapsing tube. Accordingly, some embodiments may provide for the provision of a mechanism by which to extend the life of the helix cable and therefore also extend the life of the device itself.

An electric power device is provided. The electric power device includes a power source, a working assembly powered by the power source via a power cable, and a telescopic member extending at least in part between the power source and the working assembly. The telescopic member is extendable between an extended state and a non-extended state. The power cable is extendible and collapsible to at least some degree to accommodate extension and collapsing of the telescopic member between the extended state and the non-extended state, respectively. The power cable includes a transition region where the power cable transitions to a helix portion. The telescopic member includes a cable centering assembly that is disposed proximate to the transition region to inhibit damage to the power cable responsive to the telescopic member collapsing to the non-extended state.

Additionally, a cable centering assembly is provided. The cable centering assembly may inhibit damage to a power cable provided in a telescopic member of an electric power device. The power cable includes a transition region where the power cable transitions to a helix portion. The cable centering assembly includes a mechanical bush disposed within an outer tube of the telescopic member proximate to the transition region. The telescopic member further includes an inner tube in slidable engagement with the outer tube to extend and collapse between an extended state and a non-extended state, respectively. The power cable is extendible and collapsible to at least some degree to accommodate extension and collapsing of the telescopic member between the extended state and the non-extended state. The mechanical bush has an outer diameter smaller than an inner diameter of the outer tube and has an inner diameter larger than a diameter of a helix portion of the power cable.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1A illustrates a side view of an electric powered hedge trimmer that may be configured in accordance with an example embodiment, while the trimmer is in a non-extended state;
FIG. 1B illustrates a side view of an electric powered hedge trimmer that may be configured in accordance with an example embodiment, while the trimmer is in an extended state;
FIG. 2 illustrates a side view of a telescoping tube with part of the tubing removed to reveal some of the internal components of the telescoping tube;
FIG. 3A illustrates a side view of the telescoping tube in a non-extended state with part of the tubing removed to reveal a mechanical bush that may be employed to center a helix cable in the telescoping tube according to an example embodiment;
FIG. 3B illustrates a side view of the telescoping tube in an extended state with part of the tubing removed to reveal the mechanical bush that may be employed to center the helix cable in the telescoping tube according to an example embodiment;
FIG. 4A illustrates a side view of the telescoping tube in an extended state with part of the tubing removed to reveal an alternative structure of a mechanical bush that may be employed to center the helix cable in the telescoping tube according to an example embodiment;
FIG. 4B illustrates a side view of the telescoping tube in a non-extended state with part of the tubing removed to reveal the alternative structure of the mechanical bush that may be employed to center the helix cable in the telescoping tube according to an example embodiment;
FIG. 5 illustrates a cross-section view of a portion of the power device with the right half portion of the casing removed according to an example embodiment; and
FIG. 6 illustrates a block diagram of the electric power device according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

A telescoping tube used to house a retractable or at least extendable and collapsible power cord may, in some cases, cause damage to the cord after repeated use. Some example embodiments described herein provide a cable centering assembly (e.g., a mechanical bush) for centering the helix cable within a telescoping tube. This centering may be useful in connection with preventing damage to the helix cable when the telescoping tube is collapsed after it has been extended. By reducing or avoiding impact on the helix cable, the life of the helix cable may be extended and the communication of charge from the battery (or other power source) of the device to the telescoping tube may be prevented. Accordingly, the useful life and the general utility of the device may be improved.

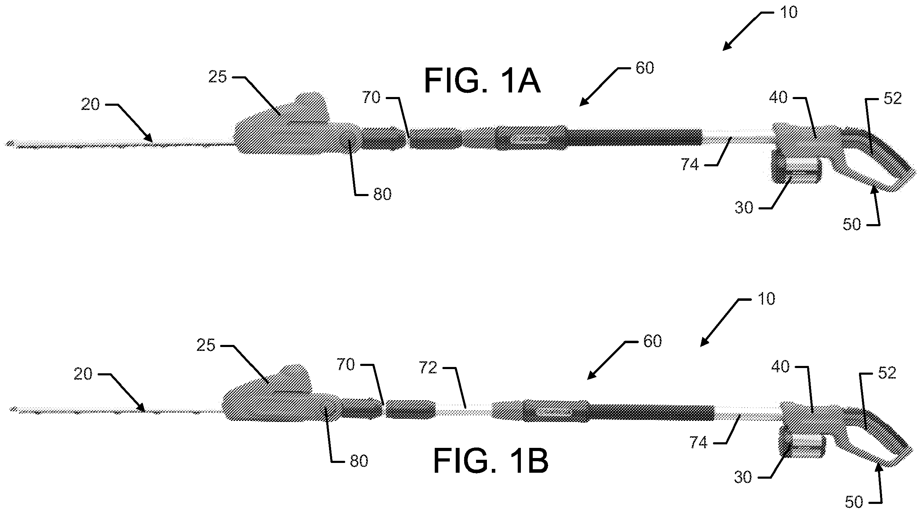

Referring to the drawings, FIG. 1, which includes FIGS. 1A and 1B, shows an example of an electric powered trimmer 10 (e.g., a hedge trimmer) that may be configured in accordance with an example embodiment. However, it should be appreciated that the trimmer 10 is merely one example of an electric powered, device that may be configured in accordance with an example embodiment. Thus, for example, some embodiments may be practiced in connection with other outdoor power devices such as edgers, brush cutters, and/or the like. It should also be appreciated that example embodiments could also be practiced on indoor power equipment such as vacuum cleaners or other devices with extendible features.

While the trimmer 10 of FIG. 1 is a battery powered device, it should be appreciated that example embodiments could alternatively be employed in connection with corded versions of various electric powered, outdoor (or indoor) power devices. Thus, although an example embodiment will be described hereinafter with specific reference to the battery powered trimmer 10 of FIG. 1, the applicability of alternative embodiments relative to other types of devices should be well understood.

As shown in FIG. 1, the trimmer 10 may include a working implement 20 or working assembly, which in this example is a reciprocating cutting blade assembly having fixed and movable cutters. A motor assembly 25 of the trimmer 10 may be used to power movable cutters of the working implement 20 so that effective cutting may be employed relative to any vegetation that is between the fixed and movable cutters. In other embodiments, the working implement 20 could be any other working component of the outdoor power device employing an example embodiment. For example, if the outdoor power device is an electric chainsaw, the working implement may be the chainsaw bar and cutting chain disposed thereon. Rotating blades or other implements may be used in other alternative embodiments.

The motor assembly 25 of the hedge trimmer 10 may be powered, according to this example, by a battery pack 30. Thus, the motor assembly 25 may include a housing to contain an electric motor and any needed gears or other driving components for moving the movable cutters of the working implement. The battery pack 30 may be received into a battery compartment of the trimmer 10 and may include one or more battery cells configured to be rechargeable or replaceable for powering the motor assembly 25. The battery compartment may be a recess or cavity formed in a casing 40 of the trimmer 10, or as is the case in FIG. 1, may be attached to the casing 40 of the trimmer 10. In some embodiments, the casing 40 may be formed from one or more plastic or other rigid components that may be molded to have a desired shape. The casing 40 may substantially enclose the battery pack 30 (or form an attachment point for the same) and/or may house control circuitry and other internal components of the trimmer 10. In some cases, cabling may extend from the battery pack 30 through the casing 40 to the motor assembly 25 to provide electrical power to the motor assembly 25.

In an example embodiment, the hedge trimmer 10 may include a rear handle 50 and a front handle portion 60. An operator of the hedge trimmer 10 may use one hand to hold the front handle portion 60 and the other hand to hold the rear handle 50 while operating the hedge trimmer 10. In some embodiments, the rear handle 50 may include a trigger 52 or other control mechanism for engaging operation of the motor to power the working implement 20. The rear handle 50 may be attached to a rear portion of the casing 40 and the front handle portion 60 may be attached to a front portion of the casing 40. The front handle portion 60 may be disposed on or even be a part of an elongated member that connects the casing 40 to the motor assembly 25. The elongated member may be embodied as a tube or other hollow cylindrical shaft that extends the reach of the working implement 20 while also providing a conduit through which the cables are run for providing power from the battery pack 30 to the motor assembly 25.

In some cases, the trimmer 10 may be configured to enable the operator to further extend the reach of the working implement 20 and/or to alter the arrangement of the working implement 20. As such, in some embodiments, the elongated member may be an extendible shaft in the form of, for example, a telescoping tube 70. The telescoping tube 70 may be made of metal, plastic, or some other rigid material. The telescoping tub 70 may extend between the casing 40 and the motor assembly 25 to house cables as indicated above. However, the telescoping tube 70 may include an outer tube that is slidable to expose at least a portion of an inner tube 72 to extend the length of the extendible shaft. As such, the trimmer 10 is configured to enable the extendible shaft formed by the telescoping tube 70 to be extended as shown in FIG. 1B to further enhance the length of the extendible shaft. The telescoping tube 70 can also be collapsed to a non-extended state as shown in FIG. 1A by enabling the inner tube 72 to be slid within the outer tube to substantially cover the inner tube 72. An extension assembly may be provided to enable the operator to tighten or loosen connections associated with the outer tube and inner tube 72 to fix the telescoping tube 70 at a desired length. In some cases, further flexibility of the trimmer 10 may be provided by equipping the working implement 20 with a pivot joint 80 that can enable the operator to alter the angle between the working implement and the telescoping tube 70.

In situations where the telescoping tube 70, or something like it, is employed, it may be desirable to employ a cable for connecting power to the motor assembly 25, where the cable can extend and contract to accommodate the extension and contraction of the telescoping tube 70. A helix cable may be a useful cable to employ in connection with such situations. Helix cables are relatively well known cables that have been very commonly used to connect telephone handsets to their respective base modules. Helix cables are useful because they are extremely flexible and, in particular, are expandable and contractible along a longitudinal direction. Thus, by inserting a helix cable inside the telescoping tube 70, the helix cable can easily expand in length when the telescoping tube 70 is expanded to an extended state and can easily contract to prevent tangling or binding of cable inside the tube when the telescoping tube 70 is returned to the non-expanded state.

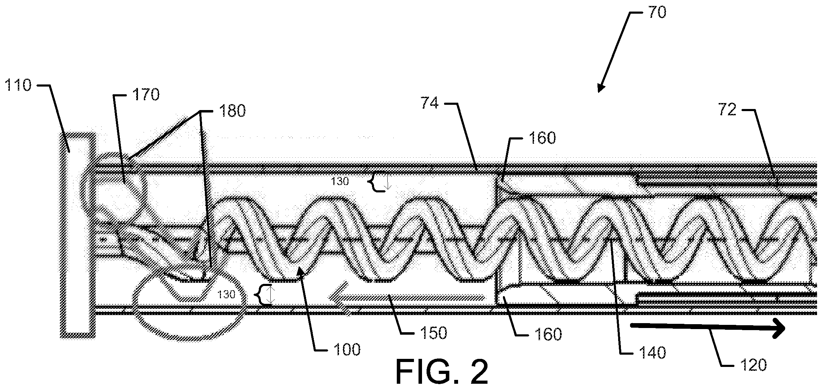

Even though the helix cable can be a useful cable for employment in the telescoping tube 70, without further design consideration, there may be some issues created. For example, FIG. 2 illustrates an embodiment in which a helix cable 100 is inserted into the telescoping tube 70 without such further design consideration. In the example of FIG. 2, the helix cable 100 may be fixed or otherwise pass through an endplate 110 (which could form a portion of the casing 40 or a wall of the motor assembly 25 in some cases) to be fixed or otherwise connected to components outside the telescoping tube 70. The inner tube 72 may be extended by moving it in a direction shown by arrow 120 and the helix cable 100 may extend within the telescoping tube 70. As can be appreciated from the image of FIG. 2, the inner tube 72 has a smaller outer diameter than the inner diameter of the outer tube 74 to enable the inner tube 72 to slide within the outer tube 74 to permit extension and contraction of the telescoping tube 70. Accordingly, as the inner tube 72 is moved in the direction of arrow 120 a space 130 is created where the helix cable 100 is farther away from contact with the outer tube 74 than the distance between the outer diameter of the helix cable 100 and the inner tube 72. As the helix cable 100 expands, the helix cable 100 may tend to remain centered within the telescoping tube 70 about the longitudinal axis of the tubes 140. However, when the inner tube 72 is slid in the direction of arrow 150, an end portion 160 of the inner tube 72 may begin to fill the space 130 as the telescoping tube 70 collapses. If the helix cable 100 is deformed by the compression forces and moves out of its central location, portions of the helix cable 100 may encroach into the space 130 as shown by the theoretical compressed cable outline 170 of FIG. 2.

The encroachment of the helix cable 100 into the space 130 may render critical areas 180 of the helix cable 100 that correspond to the theoretical compressed cable outline 170 susceptible to impact by or at least contact with the end portion 160 when the end portion 160 approaches the endplate 110. The impact or contact may cause pinching, cutting, scraping, abrading or at least unwanted friction between the end portion 160 (or end sleeve) and the helix cable 100. Over time, or even in one highly impactful event, the end portion 160 may breach or otherwise compromise the insulation on the helix cable 100. The electrical power intended for transmission to the motor assembly 25 may therefore be inhibited and, in some cases, could even electrify the telescoping tube 70 (e.g., if the telescoping tube 70 is a metallic component).

To avoid the situation described in connection with the example embodiment of FIG. 2, some embodiments may further include a mechanical bush that may be installed in the telescoping tube 70 to mitigate or eliminate the possibility of damaging the helix cable 100 by providing for centering of the helix cable, particularly in the region proximate to the endplate 110.

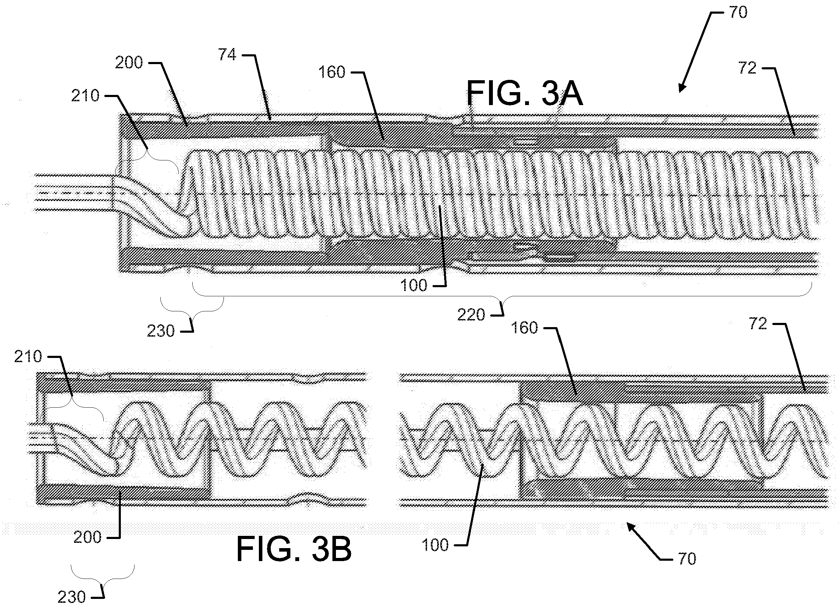

FIG. 3, which includes FIGS. 3A and 3B, illustrates an example embodiment in which a mechanical bush 200 is employed as described above. The mechanical bush 200 may be provided inside the outer tube 74 to mitigate or prevent damage to the helix cable 100. In this regard, the mechanical bush 200 may be disposed proximate to a portion of the helix cable 100 where a transition occurs between a straight cable portion 210 and a helical portion 220. This transition region 230 may generally be the portion of the cable that corresponds to the critical areas 180 of FIG. 2. The transition region 230 may also be understood to correspond to the portion of the helix cable 100 at which the helix begins. By providing the mechanical bush 200 proximate to the transition region 230, the end portion 160 may abut the mechanical bush 200 when the telescoping tube 70 is in the non-extended position (as shown in FIG. 3A).

Accordingly, when the inner tube 72 is moved away from the mechanical bush 200 toward an extended position as shown in FIG. 3B, the mechanical bush 200 remains in place proximate to the endplate 110 and to facilitate centering of the helix cable 100 in the transition region 230. When the inner tube 72 is moved toward the mechanical bush 200 to collapse the telescoping tube 70, any deformation of the helix cable 100 will be mitigated by the mechanical bush 200 so that the helix cable 100 again tends to stay relatively centered in the transition region 230. Maintaining the helix cable 100 relatively centered may prevent any portion of the helix cable 100 from being pinched or otherwise abraded by the end portion 160 as the inner tube 72 is collapsed back into contact with the mechanical bush 200.

As can be appreciated from FIG. 3, the mechanical bush 200 may be any mechanical apparatus insertable into the outer tube 74 to interface between the moving inner tube 74 and the helix cable 100 in order to reduce movement of the helix cable 100 as the inner tube 72 approaches the endplate 110. In some cases, the mechanical bush 200 may be a hollow cylindrical component with a continuous periphery. However, the periphery of the mechanical bush 200 need not be continuous in all cases. The mechanical bush 200 may be made of metal, plastic or any other substantially rigid material. In some cases, plastic or some other non-conductive material may be considered to be preferable or useful.

The mechanical bush 200 of the example in FIG. 3 may have an outer diameter that is slightly smaller than the inner diameter of the outer tube 74, and the mechanical bush 200 may be affixed to the outer tube 74, the endplate 110, or another component to maintain its position proximate to the transition region 230. In some cases, the sizing of the mechanical bush 200 may be such that friction between the mechanical bush 200 and the outer tube 74 is sufficient to prevent the mechanical bush 200 from moving. The inner diameter of the mechanical bush 200 may be large enough to accommodate the largest diameter of the helix cable 100.

In some embodiments, the mechanical bush 200 may also be provided to have an expanding inner diameter as the mechanical bush 200 extends away from the endplate 110. As such, the mechanical bush 200 may include a beveled, chamfered or fluted interior facing away from the endplate 110. Since the diameter of the mechanical bush 200 increases, the mechanical bush 200 may essentially funnel the helix cable 100 into the mechanical bush 200 when the helix cable 100 collapses to a non-expanded state.

In some cases, the mechanical bush 200 may have a length that is sufficient to reach from the endplate 110 to a point of the helix cable 100 that at least covers or is past the transition region 230. In an example embodiment, the mechanical bush 200 may be provided with a length sufficient to cover an entirety of the straight cable portion 210 that is within the outer tube 74 and at least a predetermined number of coils beyond the transition region 230 when the helix cable 100 is in a relaxed state (as shown in FIG. 3A). Thus, the transition region 230 may remain proximate to the mechanical bush 200 when the helix cable 100 is stretched out to an expanded state as the inner tube 72 is moved away from the mechanical bush 200 for extension of the telescoping tube 70.

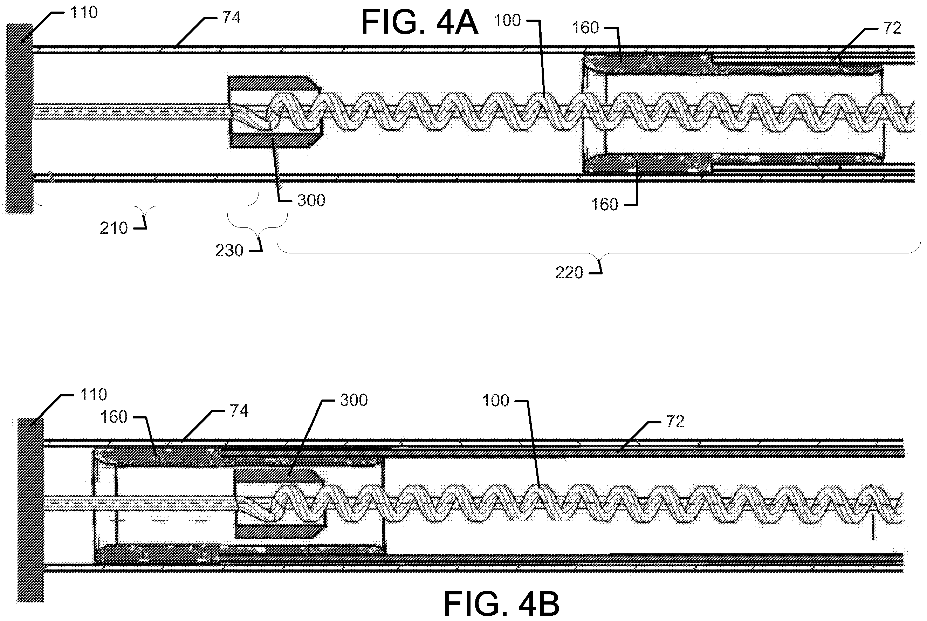

Although the mechanical bush 200 may be provided proximate to the endplate 110 and the outer tube 74, as shown in FIG. 3, it is also possible to provide a mechanical bush 300 spaced apart from one or both of the endplate 110 and the outer tube 74. Thus, it should also be appreciated that the mechanical bush 300 could extend to the endplate 110 in some cases to further protect the helix cable 100 while allowing the telescoping of the inner and outer tubes to extend along the whole length of the telescoping tube 70. FIG. 4, which includes FIGS. 4A and 4B, illustrates an example in which the mechanical bush 300 is spaced apart from both of the endplate 110 and the outer tube 74. Such a design may be referred to as a "floating" design since the mechanical bush 300 may be floating or at least spaced apart from the endplate 110 and/or the outer tube 74. However, the principle of operation of the mechanical bush 300 may be substantially the same as described above in reference to FIG. 2. In this regard, the mechanical bush 300 may be placed proximate to the helix cable 100 at the transition region 230 of the helix cable 100 to prevent pinching, cutting, scraping, abrading or other unwanted friction between the end portion 160 and the helix cable 100 when the inner tube 72 is collapsed into the outer tube 74 to transition the telescoping tube 70 to the non-extended position (as shown in FIG. 4B) from the extended position (as shown in FIG. 4A.

In the example of FIG. 4, the mechanical bush 300 may alternatively (or additionally) include a beveled, chamfered or fluted edge along the outer surface of the mechanical bush 300. Accordingly, at a portion of the mechanical bush 300 that encounters the end portion 160 of the inner tube 72 first when the telescoping tube 70 is transitioned to the non-extended position from the extended position, the outer diameter of the mechanical bush 300 may decrease as the end of the mechanical bush 300 is approached. Such a design may ensure that the end portion 160 (which may also be beveled, chamfered or fluted relative to its internal diameter facing the mechanical bush 300) may be guided over the mechanical bush 300 and may not be hung up or caught on the mechanical bush 300 when the telescoping tube 70 is collapsed. In this example, when the inner tube 72 is fully collapsed, the inner tube 72 extends over an entirety of the length of the mechanical bush 300, unlike the example of FIG. 2 in which the inner tube 72 only collapses to a point at which the inner tube 74 engages an end portion of the mechanical bush 200.

In some embodiments, the mechanical bush 300 may be affixed directly to the helix cable 100. Thus, for example, the mechanical bush 300 may be movable within the outer tube 74. The movement permitted may be relatively small, but could be permitted in either or both of the longitudinal and transverse directions responsive to movement of the helix cable 100.

In some cases, the mechanical bush 300 may have a tight fitting end cap on the side opposite the direction from which the end portion 160 approaches when the telescoping tube 70 is collapsed. Alternatively (or additionally), the mechanical bush 300 could be affixed to the outer tube 74 via a screw, post, or other fixing member that may be, for example, made of plastic or some other non-conducting material. In such an example, the inner tube 74 may be provided with a groove along at least a portion of the a longitudinal length thereof to receive the screw, post or other fixing member as the telescoping tube 70 is collapsed.

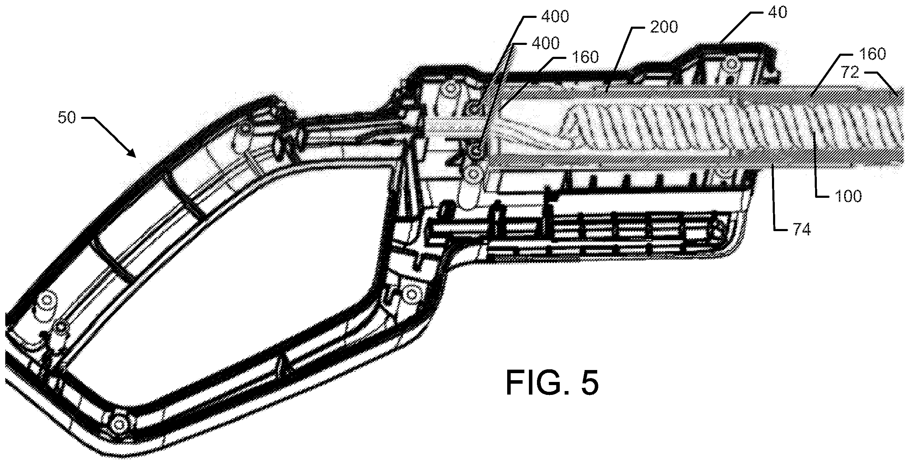

The helix cable 100 could be affixed to the trimmer 10 via any of a number of different methods as well. For example, in some cases, the endplate 110 may have an orifice sized to allow the straight cable portion 210 to pass there through, but the orifice may further be sized to apply a fixing force onto the helix cable 100. Alternatively or additionally, as shown in FIG. 5, the straight cable portion 210 may pass through the endplate 110 and fixing screws 400 may be provided to affix the helix cable 100 to the casing 40. It should be appreciated that although this example suggests that the outer tube 74 is affixed to the casing 40 and the inner tube 72 would be affixed to the motor assembly 25, the opposite structural arrangement could alternatively be provided in some cases. Additionally, alternative fixing methods may be employed in different embodiments.

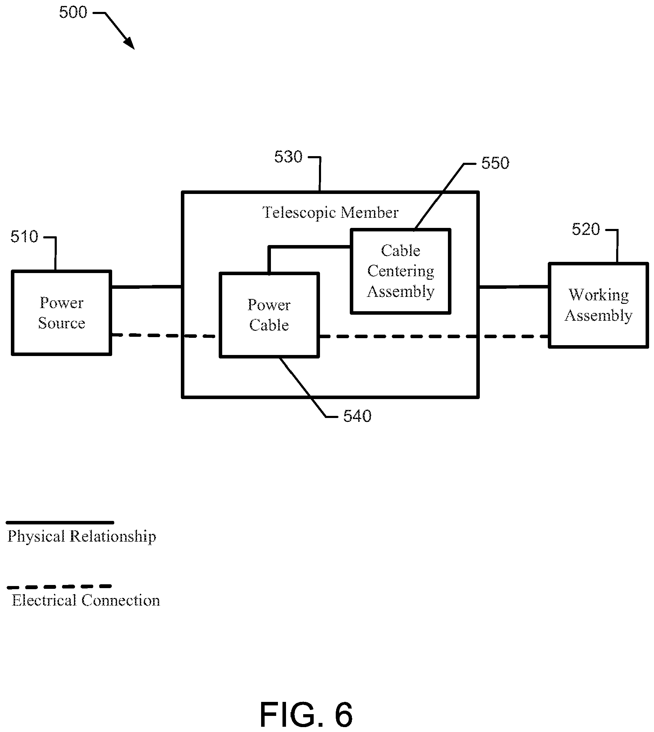

Based on the examples described above, it should be appreciated that the mechanical bushes 200 and 300 described above, are specific examples of a helix cable centering assembly for centering the helix cable at the transition region thereof. FIG. 6 illustrates a block diagram of an example embodiment. As shown in FIG. 6, a tool 500 (e.g., trimmer 10) may include a power source 510 (e.g., battery pack 30) and a working assembly 520 (e.g., working implement 20) separated by a telescopic member 530 (e.g., telescoping tube 70) with a power cable 540 (e.g., helix cable 100) provided therein to transfer power from the power source 510 to the working assembly 520. The power cable 540 may be extendible and retractable to at least some degree to accommodate extension and collapsing of the telescopic member 530, and the power cable 540 may include a transition region where the power cable 540 transitions to a helix portion. The telescopic member 530 may include a cable centering assembly 550 (e.g., mechanical bush 200/300) disposed proximate to the transition region to prevent damage to the power cable 540 when the telescopic member 530 is collapsed to the non-extended state or position.

An electric power device of an example embodiment may therefore include a power source, a working assembly powered by the power source via a power cable, and a telescopic member extending at least in part between the power source and the working assembly. The telescopic member may be extendable between an extended state and a non-extended state. The power cable may be extendible and collapsible to at least some degree to accommodate extension and collapsing of the telescopic member between the extended state and the non-extended state, respectively. The power cable may include a transition region where the power cable transitions to a helix portion. The telescopic member may include a cable centering assembly that is disposed proximate to the transition region to inhibit damage to the power cable responsive to the telescopic member collapsing to the non-extended state.

The electric power device of some embodiments may include additional features that may be optionally added either alone or in combination with each other. For example, in some embodiments, (1) the telescopic member may include an outer tube and an inner tube in slidable engagement with each other to extend and collapse between the extended state and the non-extended state, respectively. The cable centering assembly may include a mechanical bush having an outer diameter smaller than an inner diameter of the outer tube and an inner diameter larger than a diameter of the helix portion of the power cable. In some cases, in addition to (1), (2) the inner diameter of the mechanical bush may increase along a length of the mechanical bush proximate to an end of the mechanical bush that faces the inner tube as the inner tube is moved toward the mechanical bush. Additionally or alternatively, (3) the mechanical bush may be affixed proximate to an end portion of the outer tube. Additionally or alternatively, in some embodiments, (4) the inner tube may collapse to cause an end portion of the inner tube to abut the mechanical bush when the inner tube is moved to the non-extended state. In some embodiments, in addition to (1), (5) the outer diameter of the mechanical bush may decrease along a portion of a length of the mechanical bush proximate to an end of the mechanical bush that faces the inner tube as the inner tube is moved toward the mechanical bush. Additionally or alternatively, (6) the mechanical bush may be spaced apart from an end portion of the outer tube. Additionally or alternatively, (7) an outer wall of the mechanical bush may be spaced apart from an inner wall of the outer tube. Additionally or alternatively, (8) an outer diameter of the mechanical bush may be less than an inner diameter of the inner tube to enable the inner tube to extend over the transition region and the mechanical bush when the inner tube collapses to the non-extended state. Additionally or alternatively, (9) the mechanical bush may be affixed to the power cable. Additionally or alternatively, (10) an end portion of the inner tube is beveled along its internal periphery to enable the mechanical bush to fit within the end portion. Additionally or alternatively, (11) the mechanical bush may be movable in a longitudinal or transverse direction within the outer tube.

In some embodiments, any or all of (1) to (11) may be employed in addition to the optional modifications or augmentations described below. For example, in some embodiments, the device may be an outdoor power tool. Additionally or alternatively, the mechanical bush may include a hollow cylindrical member extending coaxially with a longitudinal axis of the outer tube. Additionally or alternatively, the mechanical bush may be formed of a non-metallic material. Additionally or alternatively, the power source may be a battery pack or even a mains supply. Additionally or alternatively, the battery pack may be affixed to a casing to which a handle is attached, and the outer tube may be affixed to the casing.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

### EXAMPLES

The following examples provide exemplary combinations of features which may facilitate the understanding of the invention:
1. An electric power device (500) comprising:
   a power source (510);
   a working assembly (520) powered by the power source (510) via a power cable (540); and
   a telescopic member (530) extending at least in part between the power source (510) and the working assembly (520), the telescopic member (530) being extendable between an extended state and a non-extended state, the power cable (540) being extendible and collapsible to at least some degree to accommodate extension and collapsing of the telescopic member (530) between the extended state and the non-extended state, respectively,
   wherein the power cable (540) includes a transition region (230) where the power cable (540) transitions to a helix portion (220), and
   wherein telescopic member (530) includes a cable centering assembly (550) therein, the cable centering assembly (550) being disposed proximate to the transition region (230) to inhibit damage to the power cable (540) responsive to the telescopic member (530) collapsing to the non-extended statewherein the telescopic member (530) comprises an outer tube (74) and an inner tube (72) in slidable engagement with each other to extend and collapse between the extended state and the non-extended state, respectively, and wherein the cable centering assembly (550) comprises a mechanical bush (200/300) having an outer diameter smaller than an inner diameter of the outer tube (74) and an inner diameter larger than a diameter of the helix portion (220) of the power cable (540).
2. The device (500) of example 1, wherein the inner diameter of the mechanical bush (200) increases along a length of the mechanical bush (200) proximate to an end of the mechanical bush (200) that faces the inner tube (72) as the inner tube (72) is moved toward the mechanical bush (200).
3. The device (500) of example 1 or 2, wherein the mechanical bush (200) is affixed proximate to an end portion of the outer tube (74).
4. The device (500) of any of examples 1-3, wherein the inner tube (72) collapses to cause an end portion (160) of the inner tube (72) to abut the mechanical bush (200) when the inner tube (72) is moved to the non-extended state.
5. The device (500) of example 1, wherein the outer diameter of the mechanical bush (300) decreases along a portion of a length of the mechanical bush (300) proximate to an end of the mechanical bush (300) that faces the inner tube (72) as the inner tube (72) is moved toward the mechanical bush (300).
6. The device (500) of example 1 or 5, wherein the mechanical bush (300) is spaced apart from an end portion of the outer tube (74).
7. The device (500) of example 2, 5 or 6, wherein an outer wall of the mechanical bush (300) is spaced apart from an inner wall of the outer tube (74).
8. The device (500) of any of examples 1 or 5-7, wherein an outer diameter of the mechanical bush (300) is less than an inner diameter of the inner tube (72) to enable the inner tube (72) to extend over the transition region (230) and the mechanical bush (300) when the inner tube (72) collapses to the non-extended state.
9. The device (500) of any of examples 1 or 5-8, wherein the mechanical bush (300) is affixed to the power cable (540).
10. The device (500) of any of examples 1 or 5-9, wherein an end portion (160) of the inner tube (72) is beveled along its internal periphery to enable the mechanical bush (300) to fit within the end portion (160).
11. The device (500) of any of examples 1 or 5-10, wherein the mechanical bush (300) is movable in a longitudinal or transverse direction within the outer tube (74).
12. The device (500) of any preceding example, wherein the device (500) is an outdoor power tool.
13. The device (500) of any preceding example, wherein the mechanical bush (200/300) comprises a hollow cylindrical member extending coaxially with a longitudinal axis (140) of the outer tube (74).
14. The device (500) of any preceding example, wherein the mechanical bush (200/300) is formed of a non-metallic material.
15. The device (500) of any preceding example, wherein the power source (510) is a battery pack (30).
16. The device (500) of example 16, wherein the battery pack (30) is affixed to a casing (40) to which a handle (50) is attached, and wherein the outer tube (40) is affixed to the casing (40).
18. A cable centering assembly (550) for inhibiting damage to a power cable (540) provided in a telescopic member (530) of an electric power device (500), the power cable (540) including a transition region (230) where the power cable (540) transitions to a helix portion (220), the cable centering assembly (550) comprising:
   a mechanical bush (200/300) disposed within an outer tube (74) of the telescopic member (530) proximate to the transition region (230), the telescopic member (530) further comprising an inner tube (72) in slidable engagement with the outer tube (74) to extend and collapse between an extended state and a non-extended state, respectively, the power cable (540) being extendible and collapsible to at least some degree to accommodate extension and collapsing of the telescopic member (530) between the extended state and the non-extended state,
   wherein the mechanical bush (200/300) has an outer diameter equal to or smaller than an inner diameter of the outer tube (74) and an inner diameter larger than a diameter of a helix portion (220) of the power cable (540).
19. The cable centering assembly (550) of example 18, wherein the inner diameter of the mechanical bush (200) increases along a length of the mechanical bush (200) proximate to an end of the mechanical bush (200) that faces the inner tube (72) as the inner tube (72) is moved toward the mechanical bush (200).
20. The cable centering assembly (550) of example 19, wherein the mechanical bush (200) is affixed proximate to an end portion of the outer tube (74).
21. The cable centering assembly (550) of example 18, wherein outer diameter of the mechanical bush (300) decreases along a portion of a length of the mechanical bush (300) proximate to an end of the mechanical bush (300) that faces the inner tube (72) as the inner tube (72) is moved toward the mechanical bush (300).
22. The cable centering assembly (550) of example 18, wherein the mechanical bush (300) is spaced apart from an end portion of the outer tube (74).
23. The cable centering assembly (550) of example 18, wherein an outer wall of the mechanical bush (300) is spaced apart from an inner wall of the outer tube (74).
24. The cable centering assembly (550) of example 18, wherein the mechanical bush (300) is affixed to the power cable (540).
25. The cable centering assembly (550) of any of examples 18-24, wherein the mechanical bush (200/300) is formed of a non-metallic material.

## Claims

1. An electric power device (500) comprising:
a power source (510);
a working assembly (520) powered by the power source (510) via a power cable (540); and
a telescopic member (530) extending at least in part between the power source (510) and the working assembly (520), the telescopic member (530) being extendable between an extended state and a non-extended state, the power cable (540) being extendible and collapsible to at least some degree to accommodate extension and collapsing of the telescopic member (530) between the extended state and the non-extended state, respectively,
wherein the telescopic member (530) comprises an outer tube (74) and an inner tube (72) in slidable engagement with each other to extend and collapse between the extended state and the non-extended state, respectively,
wherein the power cable (540) includes a transition region (230) where the power cable (540) transitions to a helix portion (220),
wherein the telescopic member (530) includes a cable centering assembly (550) therein, the cable centering assembly (550) being disposed proximate to the transition region (230) to inhibit damage to the power cable (540) responsive to the telescopic member (530) collapsing to the non-extended state, **characterised in that**
the cable centering assembly (550) comprises a mechanical bush (200/300) having an outer diameter smaller than an inner diameter of the outer tube (74) and an inner diameter larger than a diameter of the helix portion (220) of the power cable (540).

2. The device (500) of claim 1, wherein the inner diameter of the mechanical bush (200) increases along a length of the mechanical bush (200) proximate to an end of the mechanical bush (200) that faces the inner tube (72) as the inner tube (72) is moved toward the mechanical bush (200).

3. The device (500) of claim 1 or 2, wherein the mechanical bush (200) is affixed proximate to an end portion of the outer tube (74).

4. The device (500) of any of claims 1- 3, wherein the inner tube (72) collapses to cause an end portion (160) of the inner tube (72) to abut the mechanical bush (200) when the inner tube (72) is moved to the non-extended state.

5. The device (500) of claim 1, wherein the outer diameter of the mechanical bush (300) decreases along a portion of a length of the mechanical bush (300) proximate to an end of the mechanical bush (300) that faces the inner tube (72) as the inner tube (72) is moved toward the mechanical bush (300).

6. The device (500) of claim 1 or 5, wherein the mechanical bush (300) is spaced apart from an end portion of the outer tube (74).

7. The device (500) of any of claims 1, 5 or 6, wherein an outer wall of the mechanical bush (300) is spaced apart from an inner wall of the outer tube (74).

8. The device (500) of any of claims 1 or 5 - 7, wherein an outer diameter of the mechanical bush (300) is less than an inner diameter of the inner tube (72) to enable the inner tube (72) to extend over the transition region (230) and the mechanical bush (300) when the inner tube (72) collapses to the non-extended state.

9. The device (500) of any of claims 1 or 5 - 8, wherein the mechanical bush (300) is affixed to the power cable (540).

10. The device (500) of any of claims 1 or 5 - 9, wherein an end portion (160) of the inner tube (72) is beveled along its internal periphery to enable the mechanical bush (300) to fit within the end portion (160).

11. The device (500) of any of claims 1 or 5 - 10, wherein the mechanical bush (300) is movable in a longitudinal or transverse direction within the outer tube (74).

12. The device (500) of any preceding claim, wherein the device (500) is an outdoor power tool.

13. The device (500) of any preceding claim, wherein the mechanical bush (200/300) comprises a hollow cylindrical member extending coaxially with a longitudinal axis (140) of the outer tube (74).

## Patentansprüche

1. Elektrisch betriebene Vorrichtung (500), umfassend:
eine Stromquelle (510);
ein Arbeitsaggregat (520), das von der Stromquelle (510) über ein Stromkabel (540) versorgt wird; und
ein Teleskopelement (530), das sich, zumindest teilweise, zwischen der Stromquelle (510) und dem Arbeitsaggregat (520) erstreckt, wobei das Teleskopelement (530) zwischen einem ausgezogenen Zustand und einem nicht ausgezogenen Zustand ausziehbar bzw. einschiebbar ist, wobei das Stromkabel (540) zumindest bis zu einem gewissen Grad streckbar und zusammenschiebbar ist, um dem Ausziehen und dem Zusammenschieben des Teleskopelements (530), zwischen dem ausgezogenen Zustand und dem nicht ausgezogenen Zustand, Rechnung zu tragen,
wobei das Teleskopelement (530) ein Außenrohr (74) und ein Innenrohr (72) in Gleiteingriff miteinander umfasst, um sich ausziehen bzw. zusammenschieben zu lassen, zwischen dem ausgezogenen Zustand und dem nicht ausgezogenen Zustand,
wobei das Stromkabel (540) einen Übergangsbereich (230) aufweist, in dem es in einen spiraligen Abschnitt (220) übergeht,
wobei
das Teleskopelement (530) im Innern eine Kabelzentriereinrichtung (550) aufweist, wobei die Kabelzentriereinrichtung (550) in der Nähe des Übergangsbereiches (230) angeordnet ist, um eine Beschädigung des Stromkabels (540) in Reaktion auf ein Zusammenschieben des Teleskopelements (530) in den nicht ausgezogenen Zustand zu verhindern, **dadurch gekennzeichnet, dass**
die Kabelzentriereinrichtung (550) eine mechanische Buchse (200/300) umfasst, die einen Außendurchmesser aufweist, der kleiner als ein Innendurchmesser des Außenrohrs (74) ist, und einen Innendurchmesser, der größer als ein Durchmesser des spiraligen Abschnitts (220) des Stromkabels (540) ist.

2. Vorrichtung (500) nach Anspruch 1, wobei der Innendurchmesser der mechanischen Buchse (200) entlang einer Länge der mechanischen Buchse (200) in der Nähe eines Endes der mechanischen Buchse (200), das dem Innenrohr (72) zugewandt ist, zunimmt, wenn das Innenrohr (72) auf die mechanische Buchse (200) zu bewegt wird.

3. Vorrichtung (500) nach Anspruch 1 oder 2, wobei die mechanische Buchse (200) in der Nähe eines Endabschnitts des Außenrohrs (74) befestigt ist.

4. Vorrichtung (500) nach einem der Ansprüche 1 - 3, wobei sich das Innenrohr (72) zusammenschieben lässt, sodass ein Endabschnitt (160) des Innenrohrs (72) an der mechanischen Buchse (200) zur Anlage gelangt, wenn das Innenrohr (72) in den nicht ausgezogenen Zustand bewegt wird.

5. Vorrichtung (500) nach Anspruch 1, wobei der Außendurchmesser der mechanischen Buchse (300) entlang eines Abschnitts einer Länge der mechanischen Buchse (300) in der Nähe eines Endes der mechanischen Buchse (300), das dem Innenrohr (72) zugewandt ist, abnimmt, wenn das Innenrohr (72) auf die mechanische Buchse (300) zu bewegt wird.

6. Vorrichtung (500) nach Anspruch 1 oder 5, wobei die mechanische Buchse (300) im Abstand von einem Endabschnitt des Außenrohrs (74) ist.

7. Vorrichtung (500) nach einem der Ansprüche 1, 5 oder 6, wobei eine Außenwand der mechanischen Buchse (300) im Abstand von einer Innenwand des Außenrohrs (74) ist.

8. Vorrichtung (500) nach einem der Ansprüche 1 oder 5 - 7, wobei ein Außendurchmesser der mechanischen Buchse (300) kleiner als ein Innendurchmesser des Innenrohrs (72) ist, um zu ermöglichen, dass das Innenrohr (72) über den Übergangsbereich (230) und die mechanische Buchse (300) geht, wenn es in den nicht ausgezogenen Zustand zusammengeschoben wird.

9. Vorrichtung (500) nach einem der Ansprüche 1 oder 5 - 8, wobei die mechanische Buchse (300) am Stromkabel (540) befestigt ist.

10. Vorrichtung (500) nach einem der Ansprüche 1 oder 5 - 9, wobei ein Endabschnitt (160) des Innenrohrs (72) entlang seines Innenumfangs abgeschrägt ist, um zu ermöglichen, dass die mechanische Buchse (300) in den Endabschnitt (160) passt.

11. Vorrichtung (500) nach einem der Ansprüche 1 oder 5 - 10, wobei die mechanische Buchse (300) innerhalb des Außenrohrs (74) in Längs- oder Querrichtung beweglich ist.

12. Vorrichtung (500) nach einem vorhergehenden Anspruch, wobei die Vorrichtung (500) ein Elektrowerkzeug für draußen ist.

13. Vorrichtung (500) nach einem vorhergehenden Anspruch, wobei die mechanische Buchse (200/300) ein hohlzylindrisches Element umfasst, das sich koaxial zur Längsachse (140) des Außenrohrs (74) erstreckt.

## Revendications

1. Dispositif d'alimentation électrique (500) comprenant :
une source d'alimentation (510) ;
un ensemble de travail (520) alimenté par la source d'alimentation (510) par l'intermédiaire d'un câble d'alimentation (540) ; et
un élément télescopique (530) s'étendant au moins en partie entre la source d'alimentation (510) et l'ensemble de travail (520), l'élément télescopique (530) pouvant s'étendre entre un état étendu et un état non étendu, le câble d'alimentation (540) étant extensible et pliable au moins dans une certaine mesure pour permettre l'extension et le pliage de l'élément télescopique (530) entre l'état étendu et l'état non étendu, respectivement,
dans lequel l'élément télescopique (530) comprend un tube extérieur (74) et un tube intérieur (72) en prise coulissante l'un avec l'autre pour s'étendre et se plier entre l'état étendu et l'état non étendu, respectivement,
dans lequel le câble d'alimentation (540) comporte une région de transition (230) où le câble d'alimentation (540) effectue une transition vers une partie en hélice (220),
dans lequel l'élément télescopique (530) comporte un ensemble de centrage de câble (550) dans celui-ci, l'ensemble de centrage de câble (550) étant disposé à proximité de la région de transition (230) pour éviter l'endommagement du câble d'alimentation (540) en réponse au pliage de l'élément télescopique (530) à l'état non étendu, **caractérisé en ce que**
l'ensemble de centrage de câble (550) comprend une douille mécanique (200/300) ayant un diamètre extérieur inférieur à un diamètre intérieur du tube extérieur (74) et un diamètre intérieur supérieur à un diamètre de la partie en hélice (220) du câble d'alimentation (540).

2. Dispositif (500) de la revendication 1, dans lequel le diamètre intérieur de la douille mécanique (200) augmente sur une longueur de la douille mécanique (200) à proximité d'une extrémité de la douille mécanique (200) qui fait face au tube intérieur (72) à mesure que le tube intérieur (72) est déplacé vers la douille mécanique (200).

3. Dispositif (500) de la revendication 1 ou 2, dans lequel la douille mécanique (200) est fixée à proximité d'une partie d'extrémité du tube extérieur (74).

4. Dispositif (500) de l'une des revendications 1 à 3, dans lequel le tube intérieur (72) se plie pour amener une partie d'extrémité (160) du tube intérieur (72) à venir en butée contre la douille mécanique (200) lorsque le tube intérieur (72) est déplacé vers l'état non étendu.

5. Dispositif (500) de la revendication 1, dans lequel le diamètre extérieur de la douille mécanique (300) diminue le long d'une partie d'une longueur de la douille mécanique (300) à proximité d'une extrémité de la douille mécanique (300) qui fait face au tube intérieur (72) à mesure que le tube intérieur (72) est déplacé vers la douille mécanique (300) .

6. Dispositif (500) de la revendication 1 ou 5, dans lequel la douille mécanique (300) est espacée d'une partie d'extrémité du tube extérieur (74).

7. Dispositif (500) de l'une des revendications 1, 5 ou 6, dans lequel une paroi extérieure de la douille mécanique (300) est espacée d'une paroi intérieure du tube extérieur (74).

8. Dispositif (500) de l'une des revendications 1 ou 5 à 7, dans lequel un diamètre extérieur de la douille mécanique (300) est inférieur à un diamètre intérieur du tube intérieur (72) pour permettre au tube intérieur (72) de s'étendre sur la région de transition (230) et la douille mécanique (300) lorsque le tube intérieur (72) se plie vers l'état non étendu.

9. Dispositif (500) de l'une des revendications 1 ou 5 à 8, dans lequel la douille mécanique (300) est fixée au câble d'alimentation (540).

10. Dispositif (500) de l'une des revendications 1 ou 5 à 9, dans lequel une partie d'extrémité (160) du tube intérieur (72) est biseautée le long de sa périphérie interne pour permettre à la douille mécanique (300) de s'adapter à l'intérieur de la partie d'extrémité (160).

11. Dispositif (500) de l'une des revendications 1 ou 5 à 10, dans lequel la douille mécanique (300) est mobile dans une direction longitudinale ou transversale à l'intérieur du tube extérieur (74).

12. Dispositif (500) de l'une des revendications précédentes, dans lequel le dispositif (500) est un outil électrique d'extérieur.

13. Dispositif (500) de l'une des revendications précédentes, dans lequel la douille mécanique (200/300) comprend un élément cylindrique creux s'étendant coaxialement par rapport à un axe longitudinal (140) du tube extérieur (74).
